# EUROPEAN PATENT APPLICATION

(11) **EP 4 848 525 A1**
(43) Date of publication of application: **02.12.2026**
(21) Application number: 25382541.8
(22) Date of filing: 28.05.2025
(51) Int. Cl.: H02J 7/00, H01M 10/42, H02J 1/10

(54) **BATTERY SYSTEM**

(71) Applicant: Fundació Institut de Recerca en Energia de Catalunya, 08930 Sant Adrià de Besòs (ES)
(72) Inventor: Trilla Romero, Lluís, Barcelona (ES); Dominguez Garcia, Jose Luis, Sitges (ES); Filbà Martinez, Àlber, Dosrius (ES)
(74) Representative: Curell Suñol S.L.P.

(57) **Abstract**

The invention relates to a battery system that comprises a plurality of cells, a plurality of power electronics blocks and a central control unit. Each power electronics block is associated with a cell and comprising a direct current to high frequency alternate current converter. The central control unit comprises a controller and a battery management system, and is configured to individually monitor and control each cell and its associated power electronics block.

## Description

### Field of the invention

The invention lies in the field of rechargeable battery systems.

In particular, the invention relates to a battery system and to a computer implemented method for managing a battery system.

### State of the art

Battery packs used in electric vehicles (EVs), energy storage systems, and power backup systems contain hundreds or even thousands of cells arranged in series and parallel configurations. These designs, based on constant load requirements, struggle to handle the non-linearity and dynamics caused by time-dependent cell characteristics, production flaws, and equalization or imbalance issues during operation.

Reconfigurable battery systems (RBS) have gained attention in both research and industry due to their ability to adapt flexible topologies in series or parallel based on nonlinear, time-dependent load requirements and cell status, such as State of Charge (SoC) and State of Health (SoH). These systems typically focus on battery packs with the same type of chemistry cells. The complexity of these designs varies from low to high, depending on the number of switches per cell and their adaptability to series or parallel arrangements.

However, there are several challenges in designing and implementing RBS for industrial applications. These include thermal issues from heat generation during frequent circuit switching, sensing errors in parameters (voltage, current), potential short circuits during topology reconfiguration, inaccurate SoC/SoH estimation, complex hardware and software architecture, and improper balancing.

### Summary of the invention

It is an object of the invention to provide a battery system that is efficiently controlled based on real time data and desired use of the battery system. This purpose is achieved by a battery system of the type indicated at the beginning, characterized in that it comprises a plurality of cells or groups of cells; a plurality of power electronics blocks, each power electronics block associated to a cell or group of cells and comprising a direct current to high frequency alternate current, DC/HF_AC, converter; and a central control unit that comprises a controller and a battery management system, said central control unit being configured to monitor and control said cells or groups of cells and their associated power electronics block; wherein said battery management system is configured to receive status data from said plurality of cells or groups of cells and their associated power electronics block to determine at least one cell parameter, wherein said battery management system transmits said at least one cell parameter to said controller; and wherein said central control unit is configured to individually control each power electronics block based on said at least one cell parameter to regulate a power contribution to an output of said battery system, and wherein each power electronics block is arranged between said associated cell or groups of cells and said output.

Each cell or group of cells has its own power electronics block, which includes a DC/HF_AC converter, switches and inductances. That is, each cell or group of cells comprises a DC/HF_AC converter at its output terminal. A HF_AC/DC converter is provided at the output of the whole battery system. The proposed battery system enables individual control of power electronics blocks associated with each cell or group of cells, allowing for precise regulation of power output based on real-time status data. The battery system responds dynamically to changing load demands and can be configurated to optimize a certain parameter such as, for example, lifespan of the cells.

The invention further includes a number of preferred features that are object of the dependent claims and the utility of which will be highlighted hereinafter in the detailed description of an embodiment of the invention.

Preferably, said plurality of cells or groups of cells present different cell chemistry, morphology, capacity, State of Health, State of Charge and/or State of Power. The inclusion of cells or groups of cells with different chemistries and characteristics allows the battery system to be tailored for a wide range of applications, offering flexibility in design and usage. The technical features of the battery system discussed at the beginning make it possible to control and manage cells or groups of cells of different characteristics. This is an advantage for the flexibility of the design, but it also allows to dynamically adapt to non-equal changes that may occur to the different cells or groups of cells of the system.

Preferably, at least two of said plurality of cells or groups of cells are electrically connected in parallel by means of their respective power electronics block. That is, the cells or groups of cells are connected to each other in parallel in high frequency altern current. Therefore, power can be managed independently and there is no need to connect them in series to increase the voltage, as the voltage is increased by using the DC/HF_AC converter of each cell or group of cells.

Preferably, said central control unit further comprises an optimizer that receives at least one constraint parameter and at least one target parameter from a user and transmits at least one setpoint to said controller, so that said controller controls each cell or group of cells and their associated power electronics block based on said at least one cell parameter and said at least one setpoint. In one hand, there are constraint parameters and target parameters that are static variables, i.e., they do not change over time and can be introduced either by a user or can be previously coded in each cell or group of cells and its associated power electronics block so that the controller can read the data therefrom. Cell chemistry, number of cells or groups of cells, and capacity are a few non-limiting examples of a static variables. In the other hand, there are constraint parameters and target parameters that are dynamic variables, which can be modified by a user based on the desired use of the battery system. Cell State of Charge and desired power are non-limiting examples of dynamic variables. For example, in one type of use, it might be desired not to overcome a State of Health threshold or a temperature threshold, and in another type of use it might be desired to have an average State of Charge or a minimum State of Power. As it is apparent, the battery system can be adjusted to different demands based on different premises and requirements.

Preferably, said status data is at least one of the following: cell voltage, cell intensity, and cell temperature. The cells or groups of cells can be connected to different sensors such as force, pressure, and impedance sensors, strain gauge among others to provide different status data. Collecting detailed status data enables the system to perform advanced analytics, which can be used to optimize charging cycles, improve energy efficiency, and tailor the battery system's performance to specific application requirements.

Preferably, said at least one cell parameter is selected from the group comprising: State of Charge, State of Health, State of Power, State of Energy, State of Function, State of Safety, Remaining Useful Life, and cell temperature. Depending on the battery application, other cell parameters could be determined. By determining and monitoring these parameters, the system can predict and prevent potential failures, enhancing the overall safety and reliability of the battery system.

Preferably, said at least one target parameter is selected from the group comprising: cell chemistry, number of cells or groups of cells, capacity, desired cell State of Charge, desired cell temperature, desired cell power. The system provides a wide range of possibilities and configurations by providing a plurality of different types of target parameters, thereby increasing the flexibility of usage cases for the battery system.

Preferably, said at least one constraint parameter is selected from the group comprising: State of Health, State of Charge, State of Power, and cell temperature limit. Constraint parameters can vary based on the sensors that are connected to the cells or groups of cells. For example, there can be pressure sensors, impedance sensors, force sensors, ultrasonic sensors, strain gauge, among others. The inclusion of constraint parameters ensures that the battery system operates within safe and efficient thermal boundaries, which can prevent thermal runaway and extend the battery's operational life.

It is another object of the invention to provide a computer implemented method for managing a battery system that controls the battery cells or groups of cells individually based on real time data and desired use of the battery system. This purpose is achieved by a computer implemented method of the type indicated at the beginning, characterized in that it comprises a plurality of cells or groups of cells, where each cell or group of cells is associated with a power electronics block comprising a direct current to high frequency alternate current, DC/HF_AC, converter, said method comprising the steps of: a) collecting status data from said plurality of cells or groups of cells and associated power electronics block by means of a battery management system; b) determining at least one cell parameter based on said status data by means of said battery management system; c) determining a power contribution profile for each of said cells or group of cells based on said at least one cell parameter; and d) independently controlling each of said plurality of cells or groups of cells and their associated power electronics block to regulate said power contribution to an output of said battery system based on said at least one cell parameter.

Preferably, the computer implemented method further comprises a step of e) introducing at least one constraint parameter and at least one target parameter to the optimizer by means of a user or by previous coding, so that said optimizer 8 can determine at least one setpoint and transmit said setpoint to said controller; wherein said step e) is carried out prior said step c) and wherein said step c) is based on said at least one cell parameter and said at least one setpoint.

Preferably, at least two of said plurality of cells or groups of cells present different cell chemistry, morphology, capacity, State of Health, State of Charge and/or State of Power.

Preferably, at least two of said plurality of cells or groups of cells are electrically connected in parallel by means of their respective power electronic block.

Preferably, said at least one cell parameter is selected from the group comprising: State of Charge, State of Health, State of Power, State of Energy, State of Function, State of Safety, Remaining Useful Life, and cell temperature.

Preferably, said at least one target parameter is selected from the group comprising: cell chemistry, number of cells or groups of cells, capacity, desired cell State of Charge, desired cell temperature, desired cell power.

Preferably, said at least one constraint parameter is selected from the group comprising: State of Health, State of Charge, State of Power, and cell temperature limit.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a schematic representation of a battery system according to the invention. The solid thick lines interconnecting blocks represent power transfer, the dotted lines represent unidirectional data flow, and the dashed lines represent bidirectional data flow.
Figure 2 shows a schematic representation of the control unit of a battery system according to the invention. The representation of the lines interconnecting blocks are the same that in Figure 1.

### Detailed description of embodiments of the invention

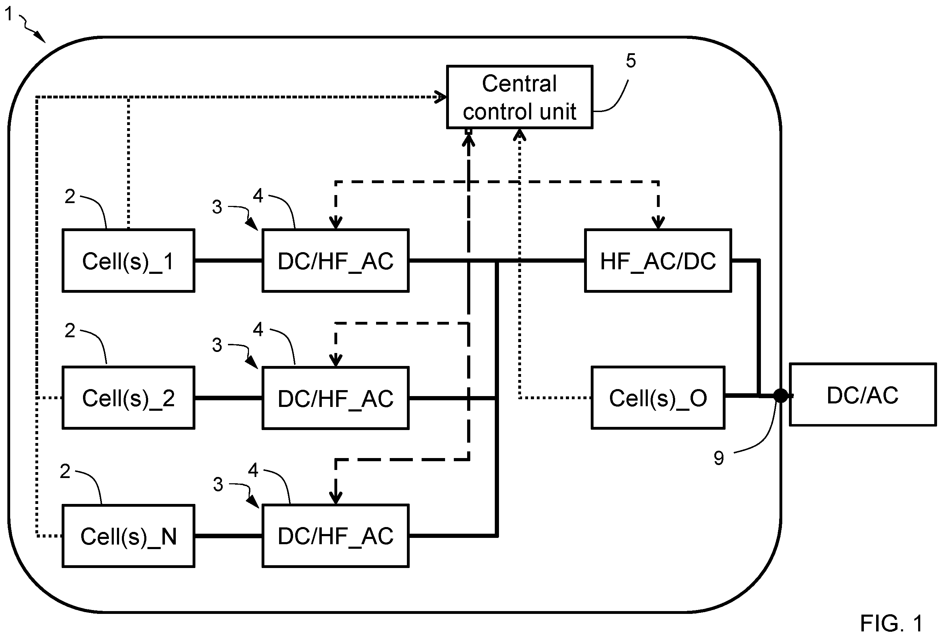

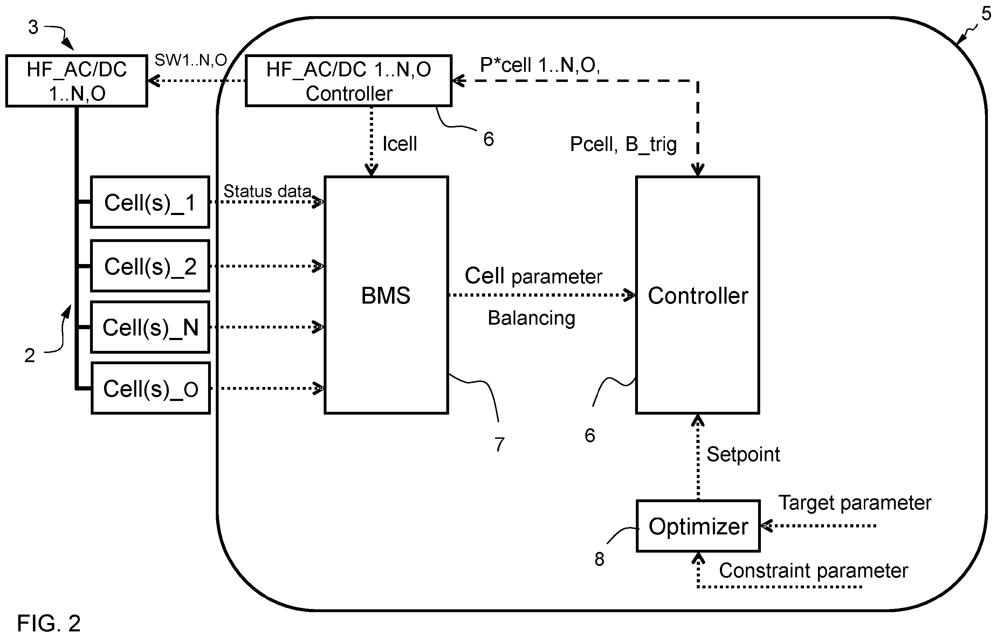

Figures 1 and 2 show a schematic representation of a first embodiment according to the invention. In this embodiment, the battery system 1 comprises a plurality of cells 2 or groups of cells 2 with their respective power electronics block 3, and an output 9. In Figures 1 and 2, the notation "1 to N" refers to a set of consecutive integers, from 1 to an integer N. Therefore, it is clear that the number of cells or groups of cells and their associated power electronic block can vary. The battery system 1 can comprise cells 2 or groups of cells 2 of different cell chemistry, morphology, capacity, State of Health, State of Charge and/or State of Power. Each cell 2 or group of cells 2 is connected to a power electronics block 3. Each power electronics block 3 has a direct current to high frequency alternate current converter, DC/HF_AC, and the necessary electronic components such as switches and inductances. As seen in Figure 1, the cells 2 or groups of cells 2 are electrically connected in parallel by means of their respective power electronics block 3. As the DC/HF_AC converters increase voltage, there is no need to electrically connect the cells 2 or groups of cells in series. Furthermore, each power electronics block 3 is arranged between its associated cell 2 or group of cells 2 and the output 9 of the battery system 9. In Figure 1, there is a DC/AC inverter electrically connected to the output 9. However, Figure 1 only aims to show that it is possible to connect other elements such a DC/AC inverter or a DC/DC converter. This will depend on the type of application that the battery system is intended to. As also seen in Figure 1, the battery system 1 comprises a high frequency altern current to direct current converter, HF_AC/DC, to convert the high frequency altern current given by the power electronics block 3 of each cell 2 or group of cells 2 into direct current, so the output 9 of the battery system 1 is in direct current. An output cell or group of cells, referred to as Cell(s)_O in Figure 1, is also connected to the output 9 of the battery system 1. The function of this output cell or group of cells is to provide a fast response when the load power varies instantly.

The battery system 1 also comprises a central control unit 5 that is configured to monitor and control the cells 2 or groups of cells 2 and their associated power electronics block 3. In order to achieve this, the central control unit 5 comprises a controller 6, a battery management system 7, and an optimizer 8. Figure 2 shows a more detailed schematic representation of the central control unit 5 of this embodiment. Note that in Figure 2 the controller 6 has been represented by two different modules: Controller and HF_AC/DC 1_N,O Controller. It has been represented this way to facilitate understanding of the controller's function. However, they can both be the same software module. HF_AC/DC 1_N,O Controller refers to the control of the power electronics block 3 and Controller refers to, among others, the generation of the power setpoints for each cell or group of cells and to the battery balancing. To better understand Figure 2:
- SW1..N,O is switching of the power converter semiconductor to manage the power flow.
- P*Cell is the desired power setpoint for each cell or group of cells.
- Pcell is the actual power flowing from the cell or group of cells.
- Icell is the current flowing through the cell or group of cells.
- Balancing flags if the balancing circuit is activated or not and B_trig activates the balancing.

In one hand, the battery management system 7 is configured to receive status data from the plurality of cells 2 or groups of cells 2 and their associated power electronics block 3 to determine at least one cell parameter. When the at least one cell parameter is determined, the battery management system 7 transmits the at least one cell parameter to the controller 6. If balancing is activated a stand alone switch closes the circuit with a parallel connected resistor to dissipate a certain amount of charge from the selected cells within the group of cells, the balancing circuit is integrated in the power electronics block. The balancing action can be activated by the control unit or be autonomous and respond to voltage level unbalances among cells within the same group.

In the other hand, the optimizer 8 receives at least one constraint parameter and at least one target parameter from a user and transmits at least one setpoint to the controller 6. The optimizer of the first exemplary embodiment includes a multivariable weighted function that addresses a cost function that is generally related to battery degradation such as the optimal working temperature or State of Charge. For example, the optimizer 8 can determine the optimal State of Charge and optimal working temperature of each cell 2 or group of cells 2 and transmits a desired total power to the controller 6. This desired total power is the power that is required at the output 9 of the battery system 1. The controller 6 will determine the power contribution of each cell 2 or group of cells 2 to the output 9. In order to do that, the controller 6 of the first exemplary embodiment uses a Model Predictive Controller, MPC, which is configured to predict future states and adjust the power outputs of the battery chemistries by controlling the converter current. The predictive nature of the MPC enables proactive adjustments, ensuring efficient power distribution, balanced SoC levels, and optimal utilization of each battery chemistry's unique characteristics. The system's objectives are optimized by formulating various cost functions, which may include maintaining a desired State of Charge, preventing State of Health degradation or capacity loss, limiting temperature rise or constraining the operational range of variables such as voltage or current. These objectives can be adjusted using weight parameters (w), which allow the system to prioritize different goals while ensuring that the system as a whole meets a specific power demand. Consequently, depending on the power demand profile, which can vary significantly based on the application, it is possible to use the most appropriate battery chemistry according to its characteristics, such as charging time or energy density. Therefore, the controller 6 can determine how to charge each cell or group of cells 2, and controls each cell 2 or group of cells 2 and its associated power electronics block 3 based on the at least one cell parameter and the at least one setpoint. Hence, the central control unit 5 is configured to individually control each power electronics block 3 based on the at least one cell parameter and the at least one setpoint to regulate a power contribution to the output 9 of the battery system 1.

The cells 2 or groups of cells 2 can be connected to different sensors such as temperature sensor, pressure sensor, impedance sensor, strain gauge, among others to obtain different cell parameters. Therefore, the cell parameter can be State of Charge, State of Health, State of Power, State of Energy, State of Function, State of Safety, Remaining Useful Life, and cell temperature; the status data can be cell voltage, cell intensity, and cell temperature; the target parameter can be cell chemistry, number of cells or groups of cells, capacity, desired cell State of Charge, desired cell temperature, desired cell power; and, the constraint parameter can be State of Health, State of Charge, State of Power, and cell temperature limit. As it has been discussed above, the battery system can be adjusted to different demands based on different cell parameters, status data, target parameters and constraint parameters. In other words, the battery system can be adapted to multiple battery uses and multiple desired configurations.

The computer implemented method for managing the battery system 1 comprises the following steps. First of all, a user introduces at least one constraint parameter and at least one target parameter to the optimizer 8. These constraint parameters and target parameters could also be previously coded into each cell 2 or battery cell and their associated power electronics block 3. The optimizer 8 determines and transmits at least one setpoint to the controller 6.

Then, the battery management system 7 collects status data from the cells 2 or groups of cells 2 and their associated power electronics block 3. These data are obtained by means of several sensors provided in each cell 2 or group of cells and its associated power electronics block 3. Then, the battery management system 7 determines at least on cell parameter based on said status data.

The controller 6 will then determine a power contribution profile for each of the cells 2 or groups of cells 2 based on the at least one cell parameter and on the at least one setpoint. Finally, the controller 6 independently controls each of the plurality of cells 2 or groups of cells 2 and their associated power electronics block 3 to regulate the power contribution to the output 9 of the battery system 1.

Following, an embodiment referring to a battery for a bicycle is explained. In this case, the battery system comprises two battery blocks. One first block of lithium-titanate battery cells, LTO, and a second block of lithium iron phosphate cells, LFP. When the bicycle starts moving, a peak of power is required. The controller 6 will give this power primarily from the LTO. If the State of Charge is very low or the temperature is very high (in both cases which are higher in the LTO than in the LFP) then it will derive more power from the LFP. The percentage of distribution will depend on the deviation from the ideal value observed in both blocks. If we consider that regenerative braking is used, the system will behave as in the case of starting.

At constant speed, pedaling assistance will be provided mainly from the LFPs, unless they are very far from their ideal operating point, in which case they will rely on the LTO to distribute the power to be delivered.

If at some point a strong imbalance is found between the State of Charge of the two blocks, power will be transferred from one to the other during operation. That is, part of the power extracted from one block will go to the other and the rest of the power to the battery output 9.

During battery charging, the two blocks will charge at different speeds according to their maximum allowable current. Therefore, in a few minutes you can have the LTO part charged (a % of the battery) while the LFP may take longer (it will depend on their respective State of Charge). This opens the door for doing a partial fast charge, if necessary, for example, for delivery people or other intermittent but intensive uses. If there has not been time to fully charge the bicycle, i.e. both blocks at 100% of the State of Charge, during use of the bicycle, the charge will be redistributed internally according to what is best to provide service (availability of power and energy) and to minimize degradation. In fact, leaving a part of the LTO State of Charge available to be able to do a fast charge again if necessary.

This example of a battery system 1 for a bicycle has been simplified. However, it must be taken into account that the battery system can control and manage many variables.

## Claims

1. Battery system (1) **characterised in that** it comprises:
- a plurality of cells (2) or groups of cells (2);
- a plurality of power electronics blocks (3), each power electronics block (3) associated to a cell (2) or group of cells (2) and comprising a direct current to high frequency alternate current, DC/HF_AC, converter (4); and
- a central control unit (5) that comprises a controller (6) and a battery management system (7), said central control unit (5) being configured to monitor and control said cells (2) or groups of cells (2) and their associated power electronics block (3);
wherein said battery management system (7) is configured to receive status data from said plurality of cells (2) or groups of cells (2) and their associated power electronics block (3) to determine at least one cell parameter, wherein said battery management system (7) transmits said at least one cell parameter to said controller (6); and wherein said central control unit (5) is configured to individually control each power electronics block (3) based on said at least one cell parameter to regulate a power contribution to an output (9) of said battery system (1), and wherein each power electronics block (3) is arranged between said associated cell (2) or groups of cells (2) and said output.

2. Batter system (1) according to claim 1, wherein at least two of said plurality of cells (2) or groups of cells (2) present different cell chemistry, morphology, capacity, State of Health, State of Charge and/or State of Power.

3. Battery system (1) according to claim 1 or 2, wherein at least two of said plurality of cells (2) or groups of cells (2) are electrically connected in parallel by means of their respective power electronics block (3).

4. Battery system (1) according to any one of claims 1 to 3, wherein said central control unit (5) further comprises an optimizer (8) that receives at least one constraint parameter and at least one target parameter from a user and transmits at least one setpoint to said controller (6), so that said controller (6) controls each cell (2) or group of cells (2) and their associated power electronics block (3) based on said at least one cell parameter and said at least one setpoint.

5. Battery system (1) according to any one of claims 1 to 4, wherein said status data is at least one of the following: cell voltage, cell intensity, and cell temperature.

6. Battery system (1) according to any one of claims 4 to 5, wherein said at least one cell parameter is selected from the group comprising: State of Charge, State of Health, State of Power, State of Energy, State of Function, State of Safety, Remaining Useful Life, and cell temperature.

7. Battery system (1) according to any one of claims 4 to 6, wherein said at least one target parameter is selected from the group comprising: cell chemistry, number of cells or groups of cells, capacity, desired cell State of Charge, desired cell temperature, desired cell power.

8. Battery system (1) according to any one of claims 1 to 7, wherein said at least one constraint parameter is selected from the group comprising: State of Health, State of Charge, State of Power, and cell temperature limit.

9. Computer implemented method for managing a battery system (1) **characterised in that** said battery system (1) comprises a plurality of cells (2) or groups of cells (2), where each cell (2) or group of cells (2) is associated with a power electronics block (3) comprising a direct current to high frequency alternate current, DC/HF_AC, converter (4), said method comprising the steps of:
a) collecting status data from said plurality of cells (2) or groups of cells (2) and associated power electronics block (3) by means of a battery management system (7);
b) determining at least one cell parameter based on said status data by means of said battery management system (7);
c) determining a power contribution profile for each of said cells (2) or group of cells (2) based on said at least one cell parameter; and
d) independently controlling each of said plurality of cells (2) or groups of cells (2) and their associated power electronics block (3) to regulate said power contribution to an output (9) of said battery system (1) based on said at least one cell parameter.

10. Computer implemented method according to claim 9, wherein it further comprises a step of:
e) introducing at least one constraint parameter and at least one target parameter to the optimizer (8) by means of a user or by previous coding, so that said optimizer (8) can determine at least one setpoint and transmit said setpoint to said controller (6),
wherein said step e) is carried out prior said step c) and wherein said step c) is based on said at least one cell parameter and said at least one setpoint.

11. Computer implemented method according to claim 9 or 10, wherein at least two of said plurality of cells (2) or groups of cells (2) present different cell chemistry, morphology, capacity, State of Health, State of Charge and/or State of Power.

12. Computer implemented method according any one of claims 9 to 11, wherein at least two of said plurality of cells (2) or groups of cells (2) are electrically connected in parallel by means of their respective power electronic block (3).

13. Computer implemented method according to any one of claims 9 to 12, wherein said at least one cell parameter is selected from the group comprising: State of Charge, State of Health, State of Power, State of Energy, State of Function, State of Safety, Remaining Useful Life, and cell temperature.

14. Computer implemented method according to any one of claims 10 to 13, wherein said at least one target parameter is selected from the group comprising: cell chemistry, number of cells or groups of cells, capacity, desired cell State of Charge, desired cell temperature, desired cell power.

15. Computer implemented method according to any one of claims 9 to 14, wherein said at least one constraint parameter is selected from the group comprising: State of Health, State of Charge, State of Power, and cell temperature limit.
